# EUROPEAN PATENT APPLICATION

(11) **EP 4 236 253 A2**
(43) Date of publication of application: **30.08.2023**
(21) Application number: 23186347.3
(22) Date of filing: 02.03.2017
(51) Int. Cl.: H04L 45/64

(54) **SLICE ALLOCATING METHOD**

(30) Priority: 09.03.2016 JP 2016045943
(62) Divisional of application: 20178505.2
(71) Applicant: NTT DOCOMO, INC., Chiyoda-ku Tokyo 100-6150 (JP)
(72) Inventor: SHIMOJOU, Takuya, Tokyo, 100-6150 (JP); SHIMIZU, Masayoshi, Tokyo, 100-6150 (JP); IWASHINA, Shigeru, Tokyo, 100-6150 (JP)
(74) Representative: Viering, Jentschura & Partner mbB Patent- und Rechtsanwälte

(57) **Abstract**

In a service mapping apparatus (10), an allocation service table, which associates a service to which a slice is allocated in advance, the slice, and an address representing an apparatus executing the service with each other, is stored. In addition, a request accepting unit (11) of the service mapping apparatus (10) receives an SLA-SL that is a requirement of a function. A determination unit (15) determines a slice including an SLA-SL corresponding to the received service requirement (SLA-SL) of the service (satisfying the service requirement). In a case in which a service that is the allocation target is associated with a slice in advance, an allocation unit (16) changes allocation of the service to the determined slice.

## Description

### Technical Field

The present invention relates to a slice allocating method.

### Background Art

A network system using a conventional virtualization technology, by using a virtualization technology disclosed in Non-Patent Literature 1, generates slices that are virtual networks logically generated on a network infrastructure by virtually dividing hardware resources. By allocating services to the slices, the services can be provided respectively using networks of independent slices. Accordingly, in a case in which slices are allocated to services having various requirements, the requirements of each service can be easily satisfied, and the signaling processing and the like thereof can be reduced.

### Citation List

### Non-Patent Literature

Non-Patent Literature 1: Akihiro Nakao, "Virtualization-node project: Virtualization technology for new generation network", [online], July 2010, National Institute of Information and Communications Technology, [Searched for and accessed on January 26, 2016], Internet <http://www.nict.go jp/publication/NICT-News/1006/01 ,html>.

### Summary of Invention

### Technical Problem

However, when a service is uniquely allocated to a slice, in a case in which a requirement of the service is dynamically changed or in a case where the status of resources providing the slice changes, it may not be able to determine that the service is always allocated to an appropriate service. In addition, also from the viewpoint of the optimization of resource use, there are cases in which it is not appropriate to fix slices.

The present invention takes into account the description presented above, and an object thereof is to provide a slice allocating method dynamically changing a service and a slice allocated to the service.

### Solution to Problem

In order to achieve the object described above, according to one aspect of the present invention, there is provided a slice allocating method executed by a first apparatus allocating a service using a virtual network generated on a network infrastructure to a slice that is the virtual network, in which the first apparatus stores correspondence information that is information associating a service to which a slice is allocated in advance, the slice, and a connection destination indicating an apparatus executing the service with each other. The slice allocating method includes: a determination step of determining a slice satisfying a service requirement that is a requirement of a function in an allocation target service; and an allocation step of changing allocation from the slice associated with the allocation target service using the correspondence information to the slice determined in the determination step.

According to the slice allocating method described above, the service is reallocated to a slice satisfying the service requirement, and accordingly, even when the service requirement is changed, the service can be reallocated to a slice satisfying the changed service requirement. In this way, a slice to be allocated can be dynamically changed in correspondence with a service requirement that is dynamically changed, and an appropriate service can be provided.

The slice allocating method described above may further include a change requesting step of requesting a second apparatus notifying a communication apparatus communicatively connected to a user of a connection destination of a service in response to a request for using the service from the user to change the connection destination to a connection destination corresponding to the slice changed in the allocation step. In such a case, after the allocation of a slice is changed, a request for changing the connection destination is performed for the second apparatus, and thus a user can be appropriately notified of a connection destination after the change in response to a service use request from the user.

The slice allocating method described above may further include: a requirement acquiring step of newly acquiring an allocation target service and a service requirement, and, in the determination step, a slice satisfying the service requirement acquired in the requirement acquiring step may be determined. In such a case, the communication control apparatus transmitting and receiving data of the service is changed in accordance with the service requirement, and thus, an appropriate service can be provided for a user using the service.

In addition, the slice allocating method described above may further include: a use status acquiring step of acquiring a resource use status for each slice and a service requirement of a service to which the slice is allocated in advance, and, in the determination step, a slice to be allocated may be determined on the basis of the service requirement and the resource use status acquired in the use status acquiring step. In such a case, since a slice to be allocated to a service is determined on the basis of the service requirement of the service to which a slice is allocated in advance and the resource status information, an appropriate slice can be dynamically allocated even in a case in which the resource status changes.

Furthermore, in the slice allocating method described above, in the determination step, a slice having a largest number of empty resources among slices satisfying the service requirement may be determined. In such a case, since the service is allocated to a slice of resources of which the number of empty resources is largest, the resources can be effectively utilized.

### Advantageous Effects of Invention

A service and a slice allocated to the service can be dynamically changed.

### Brief Description of Drawings

Fig. 1 is a diagram illustrating the configuration of a system according to an embodiment of the present invention.
Fig. 2 is a diagram illustrating a correspondence relationship between slices and resources.
Fig. 3 is a block diagram of an apparatus included in a system according to an embodiment of the present invention.
Fig. 4 is a diagram illustrating an allocation service table.
Fig. 5 is a diagram illustrating a slice table.
Fig. 6 is a diagram illustrating a user use service table.
Fig. 7 is a service parameter address table.
Fig. 8 is a diagram illustrating a function set table.
Fig. 9 is a diagram illustrating a function requirement table.
Fig. 10 is a diagram illustrating a VM function table.
Fig. 11 is a diagram illustrating a VM usage rate table.
Fig. 12 is a diagram illustrating a hardware usage rate table.
Fig. 13 is a hardware configuration diagram of a service mapping apparatus and the like.
Fig. 14 is a sequence diagram illustrating a new service process.
Fig. 15 is a sequence diagram illustrating a service reallocation process.
Fig. 16 is a diagram illustrating changes in data according to reallocation.
Fig. 17 is a sequence diagram illustrating a service reallocation process based on resources.
Fig. 18 is a diagram illustrating an example of changes in resources.
Fig. 19 is a sequence diagram illustrating a service reallocation process of a case in which editing is requested to an HSS 70.
Fig. 20 is diagram illustrating changes in data stored in the HSS 70 in accordance with reallocation.
Fig. 21 is a sequence diagram illustrating a service reallocation process based on resources of a case in which editing is requested to the HSS 70.
Fig. 22 is a modified example of data stored in the HSS 70.

### Description of Embodiments

Hereinafter, an embodiment of a slice allocating method according to one aspect of the present invention will be described in detail with reference to the drawings. In description of the drawings, the same reference signs will be assigned to the same elements, and duplicate description thereof will not be presented.

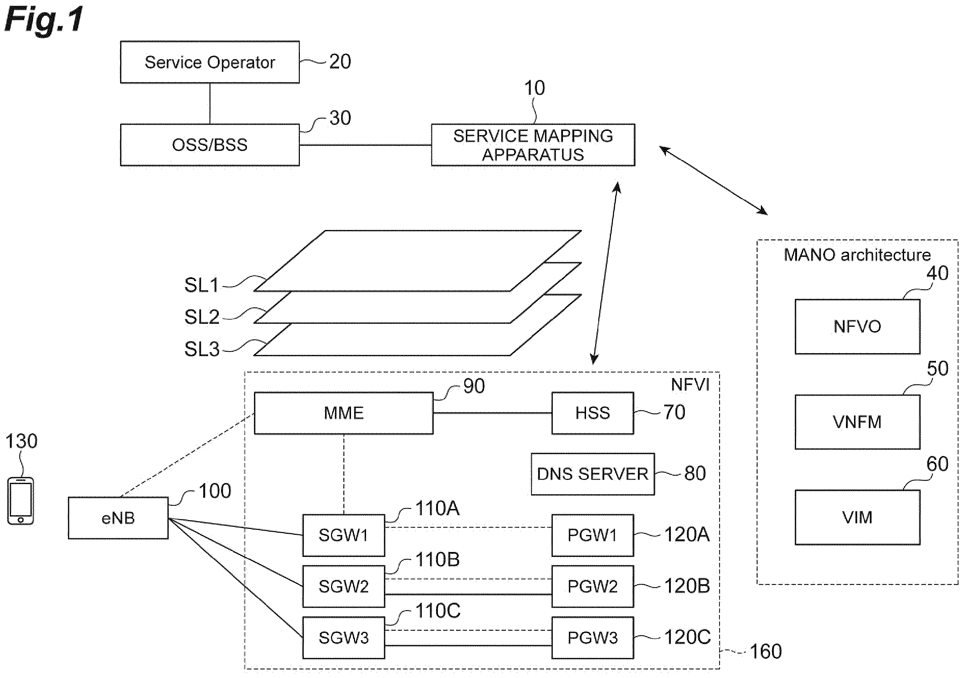

Fig. 1 is a diagram illustrating the configuration of a system 1 including a service mapping apparatus 10 according to this embodiment. The system 1 is a system that allocates a service to a slice that is a virtual network. A slice is a virtual network or a service network that is logically generated on a network infrastructure by virtually dividing resources of links and nodes of a network apparatus and combining the divided resources, and slices divide the resources and thus do not interrupt each other. A service represents a service using network resources such as a communication service (a dedicated line service or the like) or an application service (moving image distribution or a service using a sensor device such as an embedded apparatus).

As illustrated in Fig. 1, the system 1 is configured to include: a service mapping apparatus 10 (first apparatus); a service operator (SO) 20; an operations support system/business support system (OSS/BSS) 30; an NFVO 40; a VNFM 50; a virtualized infrastructure management (VIM) 60; a home subscriber server (HSS) 70 (second apparatus); a domain name system (DNS) server 80 (second apparatus); a mobility management entity (MME) 90; an eNB 100; a serving gateway (SGW) 110; a packet data network gateway (PGW) 120; and user equipment (LTE) 130. Among these, the NFVO 40, the VNFM 50, and the VIM 60 have a management & orchestration (MANO) architecture.

Such constituent elements configure a core network of the system 1. In addition, constituent elements required to transmit/receive information are connected using wires or the like, and the information can be transmitted and received.

The system 1 according to this embodiment provides a communication function for a mobile communication terminal using a virtual server operating in a virtual machine realized on a physical server. In other words, the system 1 is a virtualized mobile communication network. A communication function is provided for a mobile communication terminal by performing a communication process according to the communication function using a virtual machine.

The service mapping apparatus 10 is a node that performs service management in the system 1 and gives an instruction relating to the communication function of the system 1. In addition, the service mapping apparatus 10 may be operated by a communication company relating to the system 1.

The service operator (SO) 20 is an apparatus requesting a service and, for example, is a terminal apparatus (for example, a personal computer or the like) of a company providing services for various users using a virtual network.

The OSS/BSS 30 is an apparatus that receives a service request from the SO 20 and notifies the request to the service mapping apparatus 10.

The NFVO 40 is a whole management node (functional entity) performing management of the whole virtual network (slice) built on the NFVI 160 that is a physical resource. The NFVO 40 receives an instruction from the service mapping apparatus 10 and performs a process according to the instruction. The NFVO 40 performs management over the whole virtual network built into an infrastructure and physical resources of a mobile communication network of a communication service. The NFVO 40 realizes a communication service provided using a virtual network in an appropriate place through the VNFM 50 and VIM 60. For example, the NFVO 40 may perform management of life cycles of services (more specifically, for example, generation, update, scale control, and event collection), management of distribution, reservation, and allocation of resources over the whole mobile communication network, service/instance management, and management of policies (more specifically, for example, reservation and allocation of resources and optimal arrangement based on geography and laws and ordinances).

The VNFM 50 is a virtual communication function management node (functional entity) that adds functions relating to services to the NFVI 160 that is a physical resource (node). A plurality of VNFM's 50 may be disposed in the system 1.

The VIM 60 is a physical resource management node (functional entity) that manages each physical resource (node). More specifically, the VIM 60 performs management of allocation, update, and collection of resources, mapping between physical resources and virtual networks, and management of lists of hardware resources and SW resources (hypervisors). Generally, the VIM 60 performs management for each data center (station). The management of physical resources is performed using a system according to a data center. There are kinds of management system (mounting system of management resources) of the data center such as OPENSTACK and vCenter. Generally, VIMs 60 are disposed for each management system of the data center. In other words, in different systems, a plurality of VIMs 60 managing physical resources in the NFVI 160 are included. Here, the unit of physical resources managed in different management systems may not necessarily be a data center unit.

In addition, the NFVO 40, the VNFM 50, and the VIM 60 are realized when a program is executed on a physical server apparatus (here, they are not limited to being realized on virtualization, but, after a management system is divided, and they may be realized on virtualization). The NFVO 40, the VNFM 50, and the VIM 60 may be realized either using different physical server apparatuses or using the same server apparatus. The NFVO 40, the VNFM 50, and the VIM 60 (programs used for the realization thereof) may be provided from different vendors.

When a slice generation request is received, the NFVO 40 requests securing of resources for slices (slices SL1, SL2, and the like) for the VIM 60. When the VIM 60 secures resources in a server apparatus and a switch configuring physical resources, the NFVO 40 defines a slice for these physical resources.

In addition, when the physical resources are secured in the VIM 60, the NFVO 40 stores information defining the slice for the physical resources in a table stored by the NFVO 40. The NFVO 40 requests installation of software used for realizing a function required for the service for the VNFM 50. The VNFM 50 installs the software described above in the physical resources (nodes such as a service apparatus, a switching apparatus, a router apparatus, and the like) secured by the VIM 60.

When the software is installed by the VNFM 50, the NFVO 40 performs mapping between the slice and the service in the table stored by the NFVO 40. Slices SL1 TO SL3 are slices that are units for allocation services.

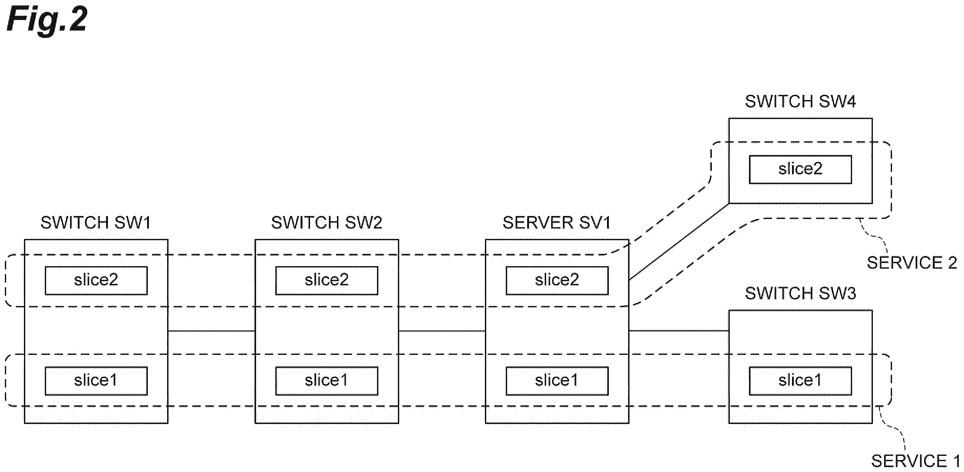

For example, as illustrated in Fig. 2, when the NFVO 40 requests securement of resources for slices (Slice 1 and Slice 2) for the VIM 60, the VIM 60 instructs indication of this to the switch SW1, the switch SW2, the server SV1, and the switch SW3. Then these switches SW1, the switch SW2, the server SV1, and the switch SW3 secure resources for Slice 1. Similarly, in accordance with an instruction from the VIM 60, the switch SW1, the switch SW2, the server SV1, and the switch SW4 secure resources for Slice 2.

The NFVI 160 that is the physical resource described above represents a network formed from physical resources (node group) configuring a virtual environment. This physical resource conceptually includes a calculation resource, a storage resource, and a transmission resource. More specifically, this physical resource is configured to include nodes such as a physical server that is a physical server apparatus performing a communication process in the system 1, a switch, and the like. The physical server is configured to include a CPU (a core or a processor) and a storage means such as a memory and a hard disk. Generally, a plurality of nodes such as physical servers configuring the NFVI 160 are disposed at bases such as data centers (DC). In a data center, disposed physical servers are connected using a network inside the data center and can transmit or receive information therebetween. In addition, in the system 1, a plurality of data centers are disposed. The data centers are connected using a network, and physical servers disposed at different data centers can transmit or receive information through the network therebetween.

As described above, the VNFM 50 adds various functions to the NFVI 160 that is a physical resource (node), whereby the NFVI 160 realizes the functions of the HSS 70, the DNS server 80, the MME 90, the SGW 110, and the PGW 120

The HSS 70 has a function of managing subscriber information including contract information, authentication information, a communication service information, terminal type information, and in-service-area information of communication terminals such as the UE 130 as a database. Here, the communication service information is information that defines a type of communication service used by each UE 130. In the communication service information, information used for identifying the UE 130 (for example, international mobile subscriber identity (IMSI)) and a service type representing a requirement of the communication service used by the UE 130 are included.

The DNS server 80 has a function of managing a correspondence relationship between a domain name or a host name and an IP address on a network. Furthermore, the DNS server 80 stores information in which a service parameter and an address of the SGW 110 are associated with each other. When a request for the transmission of an address is received from the MME 90, the DNS server 80 transmits an address of the SGW 110 according to the request to the MME 90.

The NΠVIE 90 has a function of performing position management and authentication control of a user terminal (UE 130) located in a long term evolution (LTE) network and a process of setting a communication route of user data between the SGW 110 and the UE 130. In other words, the MME 90 is a communication apparatus that is communicatively connected to the UE 130.

The eNB 100 is a radio base station connected to the NΠVIE 90 and is an apparatus having a radio access control function.

The SGW 110 transmits or receives user data used for providing a communication service with a packet data network gateway (PGW) 120 using a function of an in-service-area packet switch supporting LTE. A plurality of SGW's 110 are disposed in correspondence with requirements of a plurality of communication services.

The PGW 120 is a junction with a packet data network (PDN) and is a gateway performing allocation of an IP address, transmission of packets to the SGW 110, and the like.

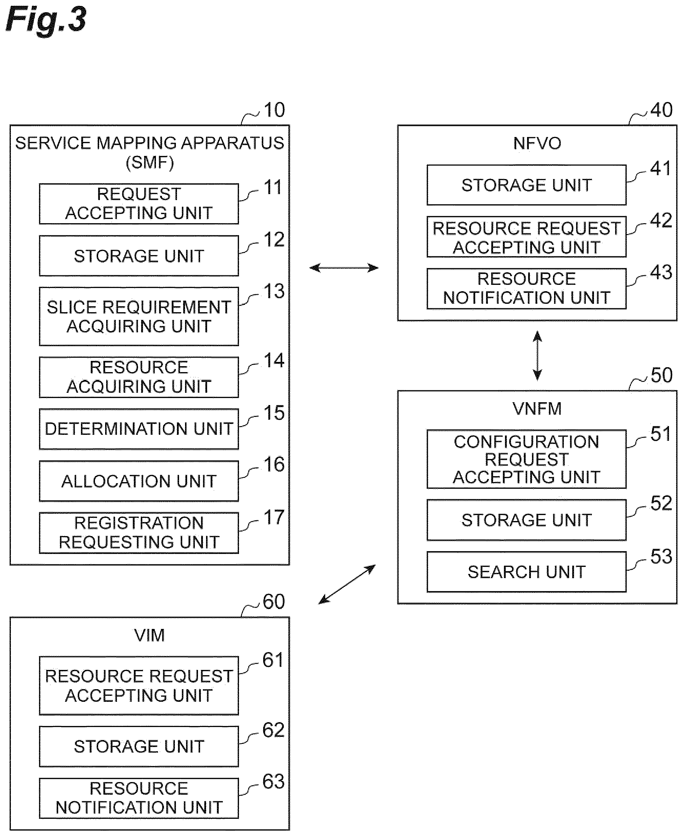

Subsequently, the function of the service mapping apparatus 10 relating to this embodiment will be described with reference to Fig. 3.

Referring back to Fig. 3, the function of the service mapping apparatus 10 will be described. As illustrated in Fig. 3, the service mapping apparatus 10 includes: a request accepting unit 11; a storage unit 12; a slice requirement acquiring unit 13; a resource acquiring unit 14; a determination unit 15; an allocation unit 16; and a registration requesting unit 17.

The request accepting unit 11 is a part that accepts a service request including a service requirement that is a requirement of a function in a service from the OSS/BSS 30. Here, among service requirements, a function requirement is a requirement relating to a function for performing a service. More specifically, as a functional requirement, necessity/non-necessity of mobility control, an accessible area range, and a service use time are included. The necessity/non-necessity of mobility control represents whether or not handover control is necessary. The access area range represents a range (area) in which a service is provided. The service use time represents a time period in which a service is used.

In addition, when a service request is accepted, the request accepting unit 11 receives information indicating a requirement of a function used for realizing the service. The information indicating the requirement of the function used for realizing the service described above is SLA-SL.

When the information indicating the requirement of the function used for realizing the service described above is received, the request accepting unit 11 transmits the service requirement to the determination unit 15. In addition, the request accepting unit 11 notifies the slice requirement acquiring unit 13 of an indication of the acquisition of the slice requirement.

Furthermore, when reaching a resource status check timing set in advance is detected, the request accepting unit 11 notifies the resource acquiring unit 14 of an indication of the acquisition of resources and notifies the determination unit 15 of an indication of the check timing described above. In addition, also in a case in which the resource status check timing has been reached, the request accepting unit 11 notifies the slice requirement acquiring unit 13 of an indication of the acquisition of a slice requirement.

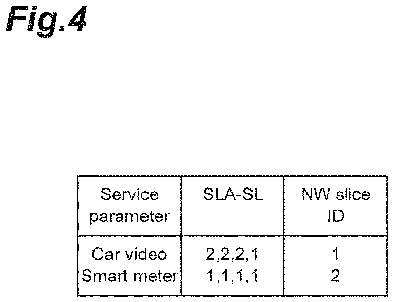

The storage unit 12 is a part that stores various tables. The storage unit 12 stores an allocation service table (correspondence information) and a slice table. Fig. 4 represents the allocation service table. As illustrated in Fig. 4, the allocation service table stores information in which a "Service parameter" field, a "SLA-SL" field, and a "NW sliceID" field are associated with each other. Here, information of the "Service parameter" field and the "SLA-SL" field is information specifying a service for which a service request is accepted from the OSS/BSS 30 and is information received from the OSS/BSS 30. Information of the "NW sliceID" field is information received from the NFVO 40. In the example illustrated in Fig. 4, it is indicated that a slice of which "NW sliceID" (a slice ID used for identifying a slice) is "2" is allocated to a service parameter that is "Smart meter" input to the "Service parameter" field.

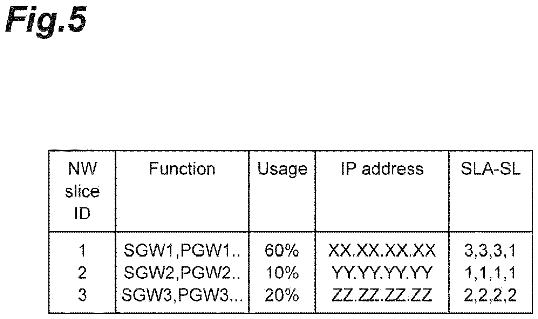

Fig. 5 illustrates the slice table. As illustrated in Fig. 5, the slice table stores information in which a "NW sliceID" field, a "Function" field, a "Usage" field, an "IP address" field, and a "SLA-SL" field are associated with each other. The information of the "NW sliceID" field, the "Function" field, the "Usage" field, the "IP address" field, and the "SLA-SL" field is information received from the NFVO 40. In the example illustrated in Fig. 5, it is indicated that a slice of which the "NW sliceID" is "1" has a usage of 60% and has an SLA-SL of "3, 3, 3, 1". When a slice is newly generated in the MANO, the service mapping apparatus 10 acquires information of the "NW sliceID" field, information of the "Function" field, information of the "Usage" field, information of the "IP address" field, and information of the "SLA-SL" field for the newly-generated slice and stores the acquired information in the slice table of the storage unit 12. In addition, the storage unit 12 also stores a requested service management table. This requested service management table is a table in which the "Service parameter" field and the "SLA-SL" field are associated with each other. In the "Service parameter" field, a service parameter received by the request accepting unit 11 from the OSS/BSS 30 is input. In the "SLA-SL" field, an SLA-SL received by the request accepting unit 11 from the OSS/BSS 30 is input. In addition to the two fields described above, a "terminal information" field is also associated with the requested service management table. In this "terminal information" field, terminal information received by the request accepting unit 11 from the OSS/BSS 30 is input.

The slice requirement acquiring unit 13 is a part that acquires the requirement (SLA-SL) of each slice by referring to the slice table, which is stored by the storage unit 12, illustrated in Fig. 5. When the requirement of the slice is acquired, the slice requirement acquiring unit 13 transmits the acquired requirement to the determination unit 15.

When a resource acquisition request is received from the request accepting unit 11, the resource acquiring unit 14 transmits a resource acquisition request to the NFVO 40. The resource acquiring unit 14 receives resource information from the NFVO 40 in response to the resource acquisition request. The resource acquiring unit 14 updates the resource information in the slice table. In addition, the resource acquiring unit 14 refers to the slice table in response to the request from the request accepting unit 11 and transmits a usage rate for each slice to the determination unit 15.

The determination unit 15 is a part that determines a slice corresponding to the service requirement of the service received by the request accepting unit 11. For example, in a case in which a service allocation request is received by the request accepting unit 11 from the OSS/BSS 30, the determination unit 15 compares the SLA-SL received from the request accepting unit 11 with the SLA-SL of the information of the slice table, which is acquired from the slice requirement acquiring unit 13, illustrated in Fig. 5, and determines an ID set in the "NW sliceID" field of the information of the slice table including all the values of the SLA-SL's received from the request accepting unit 11 (the value of the received SLA-SL or more) as a slice ID. The determination unit 15 refers to the allocation service table and, in a case in which the same service parameter as the service parameter, which is an allocation target, has been allocated in advance and in a case in which the determined slice ID described above is different from the slice ID allocated to the service parameter described above in advance requests allocation for the allocation unit 16. In addition, the determination unit 15 refers to the allocation service table and, in a case in which the same service parameter has not been allocated in advance, requests allocation for the allocation unit 16.

In addition, in a case in which resource information is acquired from the resource acquiring unit 14, the determination unit 15 determines a slice to be allocated to the service parameter that is an allocation target on the basis of the SLA-SL corresponding to each service parameter of the allocation service table, the SLA-SL of the slice table, and the resource use status for each slice acquired by the resource acquiring unit 14. More specifically, the determination unit 15 refers to the SLA-SL of the slice table and determines allocation of a service parameter to a slice having room in the resource use status (there is a vacancy in the resource) among slices satisfying the SLA-SL's corresponding to service parameters of the allocation service table. Here, having room in the resource use status indicates that an average value of the usage rates of resources for slices (VMs configuring the slices or hardware realizing the VMs) is lowest. In this case, in a case in which the slice determined this time is different from the slice allocated at the previous time, allocation is requested for the allocation unit 16. In a case in which allocation is requested for the allocation unit 16, the determination unit 15 notifies the allocation unit 16 of the terminal information, the service parameter, and the slice to be allocated.

The allocation unit 16 is a part that changes allocation to the slice determined by the determination unit 15 from the slice associated with the service, which is an allocation target, using the allocation service table. The allocation unit 16 updates the allocation service table such that the service parameter that is an allocation target is associated with the slice that is an allocation destination. In addition, in a case in which a slice is newly allocated to the service parameter, the allocation unit 16 registers the service parameter, the SLA-SL, and the terminal information in the requested service management table. Furthermore, the allocation unit 16 notifies the registration requesting unit 17 of the service parameter and an IP address corresponding to the service parameter.

The registration requesting unit 17 is a part that requests the DNS server 80 notifying the user of a connection destination of a service in response to a service use request from a user to change the connection destination to a connection destination corresponding to a slice changed by the allocation unit 16. The registration requesting unit 17 transmits the connection destination (IP address) of the service and the service parameter to the DNS server 80 or the HSS 70. In addition, in a case in which a service is newly registered, the registration requesting unit 17 transmits the terminal information (user ID) and the service parameter to the HSS 70.

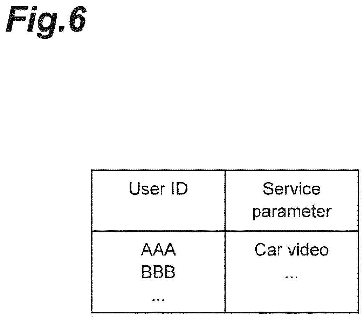

The registration requesting unit 17 is a part that requests registration for the HSS 70 and the DNS server 80. The registration requesting unit 17 receives a function set (a list of functions), terminal information, a slice ID, and a service parameter from the NFVO 40 and accepts a registration request. The registration requesting unit 17 transmits the terminal information, the slice ID, and the service parameter described above and requests editing for the HSS 70. Here, an example of information stored by the HSS 70 is illustrated in Fig. 6. The HSS 70, as illustrated in Fig. 6, stores information in which a "User ID" field and a "Service Parameter" field are associated with each other in response to the change request described above. In the "User ID" field, information used for identifying a user and, for example, information such as an IMSI is input. In the "Service Parameter" field, a service parameter is input.

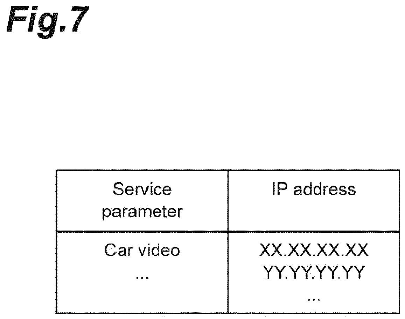

In addition, the registration requesting unit 17 acquires an IP address from the slice table using a slice ID that is a setting target as a search key. Then, the registration requesting unit 17 transmits the IP address and the service parameter to the DNS server 80 and performs an editing request. Here, an example of information stored by the DNS server 80 is illustrated in Fig. 7. The DNS server 80, as illustrated in Fig. 7, stores information in which a "Service Parameter" field and an "IP Address" field are associated with each other in response to the editing request described above. In the "Service Parameter" field, a service parameter is input. In the "IP Address" field, address information indicating an access destination is input. When the editing request described is received, the DNS server 80, in a case in which information of a service parameter of a requesting target has not been input, newly registers a service parameter and the address information described above. In a case in which the service parameter has been registered in advance, address information corresponding to the service parameter is changed into address information of a requesting target

Subsequently, the function of the NFVO 40 will be described. The NFVO 40 includes a storage unit 41, a resource request accepting unit 42, and a resource notification unit 43.

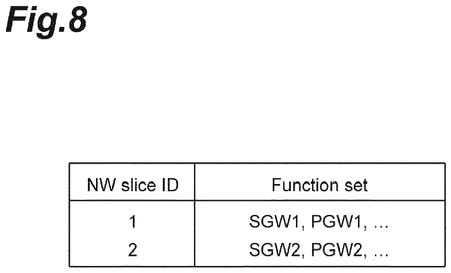

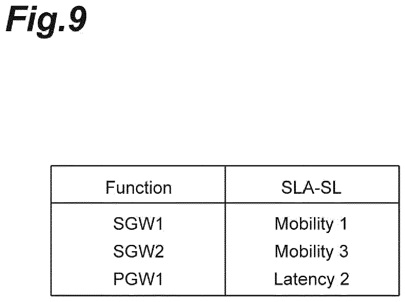

The storage unit 41 is a part that stores various tables. The storage unit 41 stores a function set table and a function requirement table. Fig. 8 illustrates a function set table. This function set table is a table storing information in which a "Slice ID" field and a "Function Set" field are associated with each other. In the "Slice ID" field, a slice ID used for identifying a slice is input. In the "Function Set" field, information indicating a function set is input. Fig. 9 illustrates a function requirement table. The function requirement table is a table storing information in which a "Function" field and an "SLA-SL" field are associated with each other. In the "Function" field illustrated in Fig. 9, information indicating a function is input. In addition, in the "SLA-SL" field, information indicating an SLA-SL corresponding to the function is input.

When a resource request is received from the service mapping apparatus 10, the resource request accepting unit 42 acquires a function set from the function set table of the storage unit 41. The resource request accepting unit 42 transmits each function of the function set to the VNFM 50 and performs a VM acquisition request. The resource request accepting unit 42 acquires a VM from the VNFM 50. Subsequently, the resource request accepting unit 42 requests the transmission of a resource use status of each VM for the VIM 60. When a resource use status is received from the VIM 60, the resource request accepting unit 42 notifies the resource notification unit 43 of the resource use status for each slice.

The resource notification unit 43 transmits the resource use status received from the resource request accepting unit 42 to the service mapping apparatus 10 for each slice.

Subsequently, the VNFM 50 will be described. The VNFM 50 includes a configuration request accepting unit 51, a storage unit 52, and a search unit 53. The configuration request accepting unit 51 is a part that receives a VM acquisition request from the NFVO 40. When a VM acquisition request is received from the NFVO 40 together with a target function, the configuration request accepting unit 51 notifies the search unit 53 of the target function. After notifying the search unit 53 of the notification, the configuration request accepting unit 51 acquires a search result acquired using the search unit 53 from the search unit 53. When the search result is received from the search unit 53, the configuration request accepting unit 51 transmits the search result to the NFVO 40.

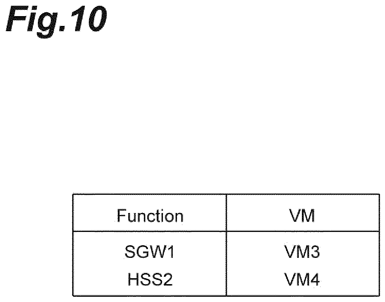

The storage unit 52 is a part that stores various kinds of information. The storage unit 52 stores software (for example, a repository). In addition, the storage unit 52 stores a VM function table including information in which a VM and a function are associated with each other in addition to the software described above. Fig. 10 illustrates an example of the VM function table. As illustrated in Fig. 10, a "Function" field, a "VM" field, and an "address" field, which is not illustrated in the drawing, representing an address of the "VM" are stored in association with each other. In the "Function" field, information indicating a function is input. In the "VM" field, information indicating a VM executing the function (for example, an identifier or the like of the VM) is input.

The search unit 53 is a part that searches the VM function table of the storage unit 52 in response to a request from the configuration request accepting unit 51 and notifies the configuration request accepting unit 51 of a result of the search. When a target function is received from the configuration request accepting unit 51, the search unit 53 searches the VM function table for a "VM" including the information of the "Function" field matching the target function, and transmits a result of the search to the configuration request accepting unit 51.

The VIM 60 includes a resource request accepting unit 61, a storage unit 62, and a resource notification unit 63. The resource request accepting unit 61 is a part that receives a resource status request from the NFVO 40 together with a target VM. When the resource status request is received, the resource request accepting unit 61 searches information of the storage unit 62 using the target VM as a search key. The resource request accepting unit 61 notifies the resource notification unit 63 of a result of the search.

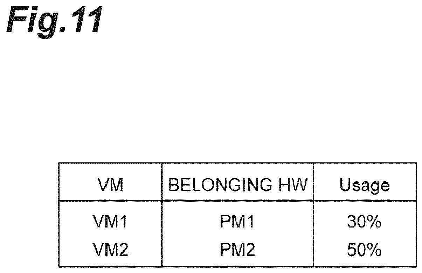

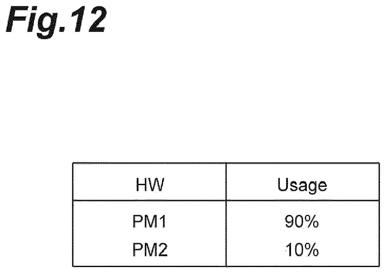

The storage unit 62 is a part that stores resource information. As the resource information, usage rate information of a VM and usage rate information of hardware realizing the VM are stored. Fig. 11 illustrates an example of the usage rate information of VM's. As illustrated in Fig. 11, information associating a "VM" field, a "belonging HW" field, and a "Usage" field with each other is stored. In the "VM" field, information indicating a VM (for example, an identifier of the VM) is input. In the "belonging HW" field, information indicating hardware (for example, a server) realizing the VM (for example, an identifier of the server) is input. In the "Usage" field, information indicating a usage rate of the VM is input. Fig. 12 illustrates an example of the usage rate information of hardware. As illustrated in Fig. 12, information in which an "HW" field and a "Usage" field are associated with each other is stored. In the "HW" field, information used for identifying hardware is input. In the "Usage" field, information indicating the usage rate of the hardware is input.

The resource notification unit 63 is a part that receives a search result from the configuration request accepting unit 51 and transmits the search result to the NFVO 40.

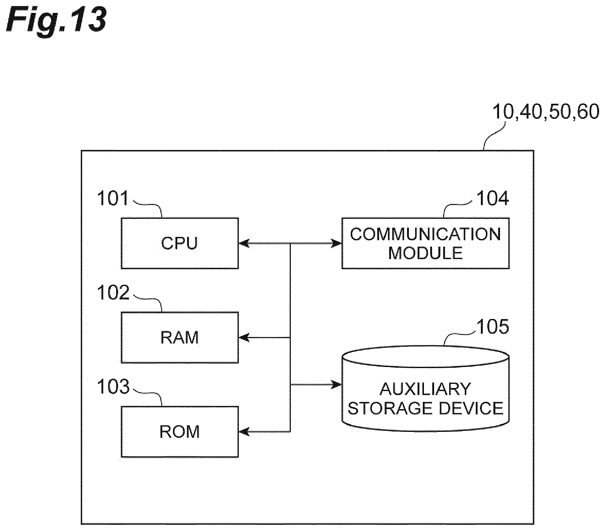

Physically, each of the service mapping apparatus 10, the NFVO 40, the VNFM 50, and the VIM 60, as illustrated in Fig. 13, is configured as a computer system including: one or a plurality of CPUs 101; a RAM 102 and a ROM 103 that are main storage devices; a communication module 104 (transmitter or receiver) that is a data transmitting/receiving device; a hard disk; an auxiliary storage device 105 (memory), for example, a flash memory or the like; and the like. In the service mapping apparatus 10, by reading predetermined computer software onto hardware such as the CPU 101, the RAM 102, and the like illustrated in Fig. 4, the communication module 104 is operated under the control of the CPU 101, and, by executing reading/writing data from/in the RAM 102 or the auxiliary storage device 105, a series of functions of the service mapping apparatus 10 is realized.

In addition, instead of executing each function illustrated in Fig. 3 using a processor such as the CPU 101 or the like, by building all or some of the functions using a dedicated integrated circuit (IC), each function may be configured to be executed. For example, by building a dedicated integrated circuit used for performing image processing or communication control, the functions described above may be executed.

It is natural that software should be broadly interpreted to mean a command, a command set, a code, a code segment, a program code, a program, a subprogram, a software module, an application, a software application, a software package, a routine, a subroutine, an object, an executable file, an executable thread, a sequence, a function, and the like regardless whether it is called software, firmware, middleware, a microcode, or a hardware description language or any other name.

In addition, the software, the command, or the like may be transmitted and received through a transmission medium. For example, in a case in which software is transmitted from a web site, a server, or any other remote source using a wired technology such as a coaxial cable, an optical fiber cable, a twisted pair or a digital subscriber line (DSL) or a wireless technology such as an infrared ray, radio, or a microwave, the such a wired technology and/or a wireless technology is included in the definition of the transmission medium.

In addition, the service mapping apparatus 10, the NFVO 40, the VNFM 50, and the VIM 60 may be configured using a computer system formed by a plurality of server apparatuses. In addition, each node other than those described above included in the system 1 may be realized using a service apparatus having the hardware configuration described above. Furthermore, a part or the whole of each function of the eNB 100 or the UE 130 (mobile communication terminal) may be realized using hardware such as an application specific integrated circuit (ASIC), a programmable logic device (PLD), a field programmable gate array (FPGA), or the like. In addition, the eNB 100 or the UE 130 may be realized using a computer apparatus including: a processor (CPU); a communication interface used for a network connection; a memory; and a computer-readable storage medium storing programs. In other words, the eNB 100, the UE 130, or the like according to one embodiment may function as a computer executing a process according to one aspect of the present invention.

Here, a processor, a memory, and the like are connected to a bus used for communication of information. In addition, the computer-readable recording medium, for example, is a flexible disk, a magneto-optical disk (for example, a compact disc, a digital versatile disc, or a Blu-ray (registered trademark) disc), a smartcard, a flash memory device (for example, a card, a stick, or a key drive), a ROM, an erasable programmable ROM (EPROM), an electrically erasable programmable ROM (EEPROM), a compact disc-ROM (CD-ROM), a RAM, a register, a removable disk, a hard disk, a floppy (registered trademark) disk, a magnetic strip, a database, a server, or any other appropriate storage medium. Furthermore, the program may be transmitted from a network through an electric telecommunication line. In addition, the eNB 100 or the UE 130 may include an input device such as an input key and an output device such as a display.

The functional configuration of the eNB 100 and the UE 130 may be realized by the hardware described above, a software module executed by the processor, or a combination thereof. The processor controls the overall operation of the user terminal by operating an operating system. In addition, the processor reads a program, a software module, and data from a storage medium into a memory and executes various processes in accordance with them.

Here, the program may be a program that causes a computer to execute each operation described in the embodiment of the invention. For example, a control unit of the mobile communication terminal may be stored in a memory and be realized using a control program operated by the processor. Any other functional block may be realized similar thereto.

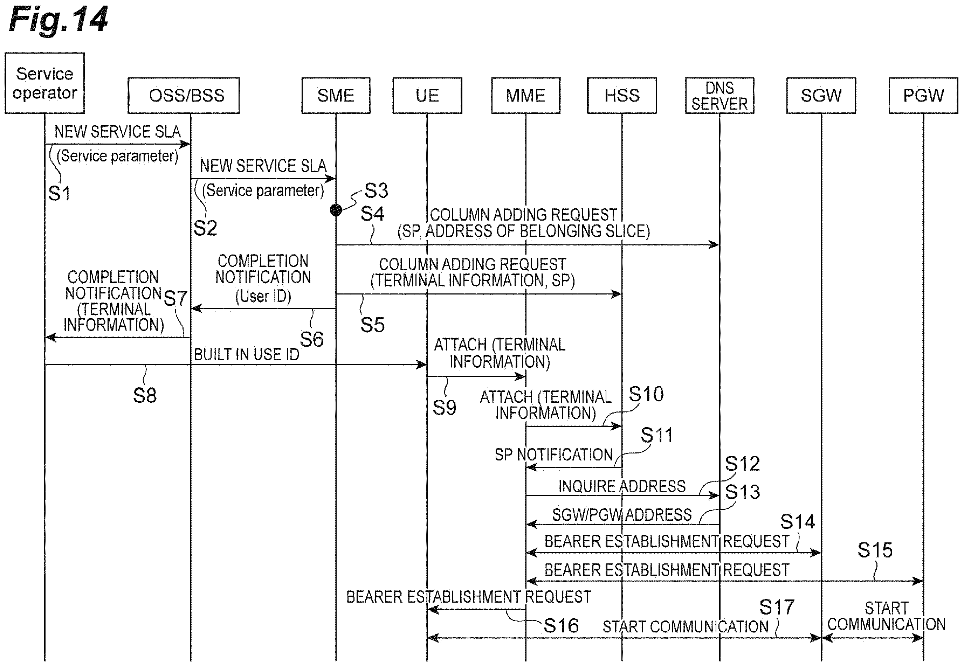

Subsequently, the process performed by the system 1 according to this embodiment will be described with reference to a sequence diagram illustrated in Fig. 14. Here, an example of a case in which there is a service allocation request from the SO 20 will be described.

The SO 20 transmits a service parameter representing the service described above, SLA-SL, and terminal information of a UE 130 using the service to the OSS/BSS 30, and makes a service allocation request (Step S1). In addition, the OSS/BSS 30 transmits the service parameter SLA-SL and the terminal information of the UE 130 using the service to the service mapping apparatus 10 and makes a service allocation request (Step S2). The request accepting unit 11 of the service mapping apparatus 10 receives the service parameter. SLA-SL, and the terminal information and accepts the service allocation request. When the service allocation request is accepted by the request accepting unit 11, the slice requirement acquiring unit 13 acquires information from the slice table stored by the storage unit 12. Then, the determination unit 15 determines a slice ID satisfying the received SLA-SL by referring to the SLA-SL of the slice table acquired by the slice requirement acquiring unit 13. In addition, the allocation unit 16 registers information in which the received service parameter, SLA-SL, and the determined slice ID are associated with each other in the allocation service table (Step S3). Subsequently, the registration requesting unit 17 transmits the service parameter and an IP address corresponding to the determined slice ID to the DNS server 80 and makes a registration request for the DNS server 80 (Step S4). In addition, the registration requesting unit 17 transmits the service parameter and the terminal information (UserID) to the HSS 70 and makes a registration request (Step S5).

In addition, when a completion notification of the registration is received from the HSS 70 and the DNS server 80, the registration requesting unit 17 transmits a registration completion notification of the service parameter to the SO 20 through the OSS/BSS 30 (Step S6 and Step S7). When the registration completion notification is received, the SO 20 notifies the UE 130 of the service parameter (Step S8). When the service is used, the UE 130 makes an Attach request for the MME 90 set in advance (Step S9). The MME 90 makes an Attach request for the HSS 70 (Step S10). The HSS 70 accepts the Attach request and searches for a service parameter corresponding to the UE 130 making the Attach request. The HSS 70 returns the retrieved service parameter to the MME 90 (Step S11). The MME 90 transmits the service parameter to the DNS server 80 and makes a request for searching an address corresponding to the service parameter (Step S12). The DNS server 80 transmits the retrieved addresses (IP addresses of the SGW 110 and the PGW 120) to the MME 90 (Step S13). The MME 90 receives the addresses, is connected to the SGW 110 of the received address, and performs bearer establishment (Step S14). In addition, the MME 90 is connected to the PGW 120 of the received address and performs bearer establishment (Step S15). The MME 90 notifies the UE 130 of a bearer connection destination (Step S16). The UE 130 accesses the connection destination received from the MME 90 and starts communication of service data (Step S17).

In the sequence diagram described above, while a case has been described in which the NΠVIE 90 receives the service parameter from the HSS 70, the service parameter may be received from the UE 130 in Step S11.

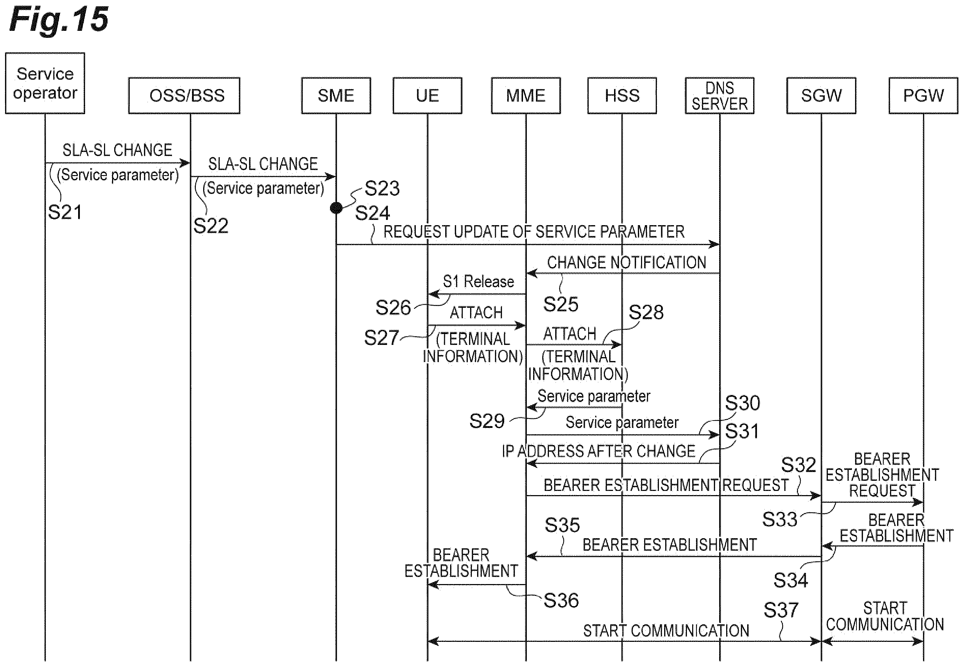

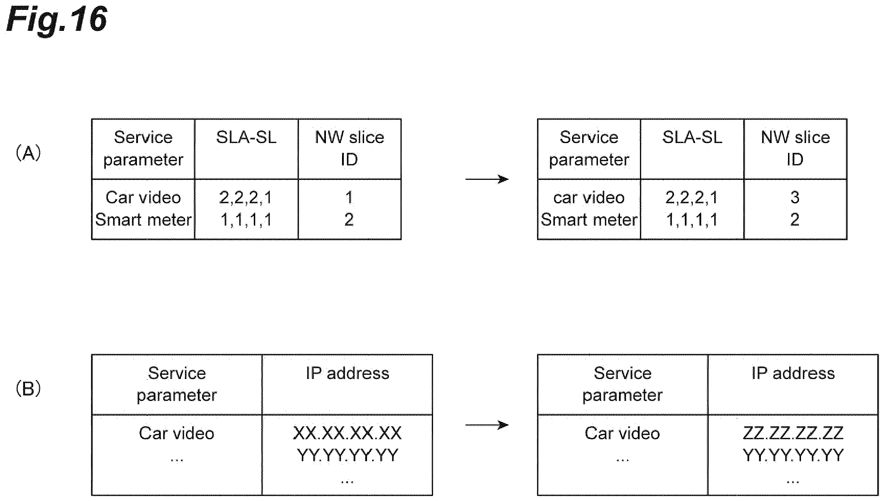

Next, a process performed by the system 1 according to this embodiment will be described using a sequence diagram illustrated in Fig. 15 and information before and after change illustrated in Fig. 16. Here, an example of a case in which the SLA-SL of a Car video is changed from "2, 2, 2, 1" to "2, 2, 2, 2" in the service mapping apparatus 10 will be described.

The SO 20 transmits the service parameter and SLA-SL to the OSS/BSS 30 and makes a service allocation request (Step S21). In addition, the OSS/BSS 30 transmits the service parameter, SLA-SL, and the terminal information of the UE 130 using the service to the service mapping apparatus 10 and makes a service allocation request (Step S22). The request accepting unit 11 of the service mapping apparatus 10 receives the service parameter and SLA-SL and accepts the service allocation request. When this service allocation request is accepted by the request accepting unit 11, the slice requirement acquiring unit 13 acquires information from the slice table, which is illustrated in Fig. 6, stored by the storage unit 12. Then, the determination unit 15 determines a slice ID satisfying the received SLA-SL by referring to the SLA-SL of the slice table acquired by the slice requirement acquiring unit 13 (Step S23). In addition, the determination unit 15 checks whether or not the same service parameter as the service parameter of the allocation target is stored in the allocation service table (it is checked whether or not the service parameter of the allocation target is stored in the allocation service table). In a case in which information including the service parameter is stored in advance, and the service parameter is associated with another slice ID, the allocation unit 16 updates the allocation service table such that the service parameter that is the allocation target and the slice that is the allocation destination are associated with each other.

The registration requesting unit 17 requests update of an address corresponding to the service parameter for the DNS server 80 (Step S24). The DNS server 80 updates the address corresponding to the service parameter in response to this update request and notifies the MME 90 of the change (Step S25). The NΠVIE 90 transmits a release notification to the UE 130 (Step S26). The UE 130 makes an Attach request for the MME 90 set in advance in response to the release notification described above (Step S27). The MME 90 makes an Attach request for the HSS 70 (Step S28). The HSS 70 accepts the Attach request and searches for a service parameter corresponding to the UE 130 making the Attach request. The HSS 70 returns the retrieved service parameter to the MME 90 (Step S29). The MME 90 transmits the service parameter to the DNS server 80 and makes a request for addresses corresponding to the service parameter (Step S30). The DNS server 80 transmits the retrieved addresses (the IP addresses of the SGW 110 and the PGW 120) to the NΠVIE 90 (Step S31). The NΠVIE 90 receives the addresses and makes a connection request for the SGW 110 of the received address (Step S32). In addition, the SGW 110 makes a bearer establishment request for the PGW 120 (Step S33), and a bearer establishment notification is performed from the PGW 120 to the SGW 110 (Step S34). In addition, a bearer establishment notification is performed from the SGW 110 to the MME 90 (Step S35). Then, a bearer establishment notification is performed from the MME 90 to the UE 130 (Step S36). The UE 130 starts communication of service data in response to the notification from the MME 90 (Step S37).

For example, Fig. 16(A) illustrates changes in the allocation service table. For example, initially, in a case in which there is a registration request for SLA-SL of "2, 2, 2, 1" in the service parameter "Car Video", a slice ID "1" is appropriate, and the allocation unit 16 sets the slice ID corresponding to the service parameter "Car Video" to "1".

Thereafter, when a registration request for the SLA-SL of "2, 2, 2, 2" in the service parameter "Car Video" is received, the slice ID is "3". Thus, the allocation unit 16 sets the slice ID of the service parameter "Car Video" to "3".

In addition, the registration requesting unit 17 requests update of an IP address of the service parameter "Car Video" for the DNS server 80. In accordance with this, as illustrated in Fig. 16(B), the IP address of the service parameter "Car Video" is updated.

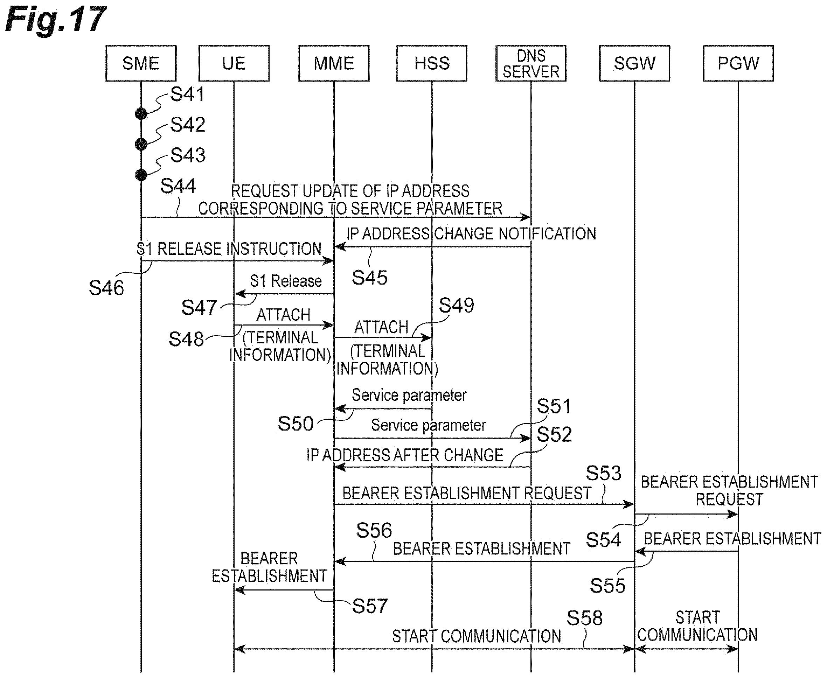

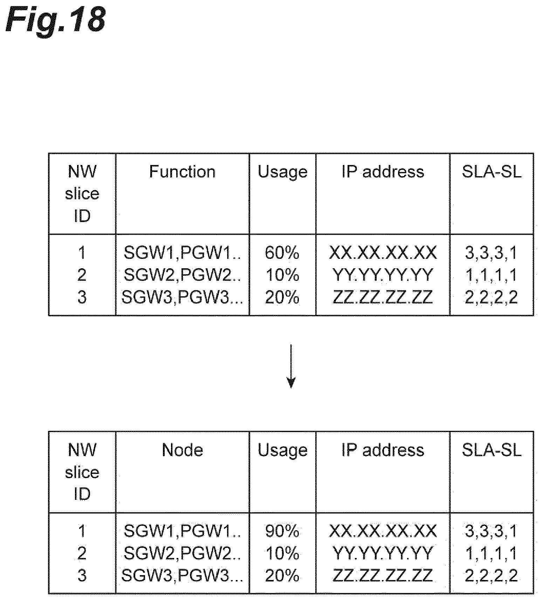

Next, a process performed by the system 1 according to this embodiment will be described using a sequence diagram illustrated in Fig. 17 and information before and after change illustrated in Fig. 18. Here, a processing method for allocating slices on the basis of statuses of resources at a predetermined timing will be described.

At a predetermined timing, the resource acquiring unit 14 of the service mapping apparatus 10 transmits a slice ID and a function set of the slice to the NFVO 40 and acquires use statuses of the resources, and updates the slice table with an acquired result. At a predetermined timing, the resource acquiring unit 14 refers to the slice table and transmits a resource use status of each slice to the determination unit 15. The determination unit 15 determines whether or not there is a slice of which the usage rate is tight (Step S41). For example, as illustrated in Fig. 18(A), in a case in which the Usage of the slice ID has been 60% in the slice table, and, as illustrated in Fig. 18(B), the Usage changes to 90%, it is determined that the usage rate of the slice ID "1" is tight.

Subsequently, the determination unit 15 determines a slice to be allocated on the basis of the SLA-SL of each slice and the use status of the VM of the function set for each slice (Step S42). More specifically, the determination unit 15 specifies a record of the slice table having an SLA-SL satisfying the SLA-SL of the service parameter stored in the allocation service table and determines that the service parameter is allocated to a slice having a largest space in the resources among slices represented by the record. The allocation unit 16 updates the allocation service table such that the service parameter that is the allocation target and the slice that is an allocation destination are associated with each other (Step S43). Steps S44 and S45 are respectively similar to Steps S24 and S25, and thus description thereof will not be presented. In addition, the registration requesting unit 17 transmits a release instruction to the MME 90 (Step S46). Steps S47 to S58 are respectively similar to Steps S26 to S37, and thus description thereof will not be presented.

In the example described above, while a case in which a change request is performed for the DNS server 80 has been described, instead of that, data stored by the HSS 70 may be updated. The processing sequences of a case in which the SLA-SL is changed and a case in which the process is changed in accordance with a change in the resources will be described.

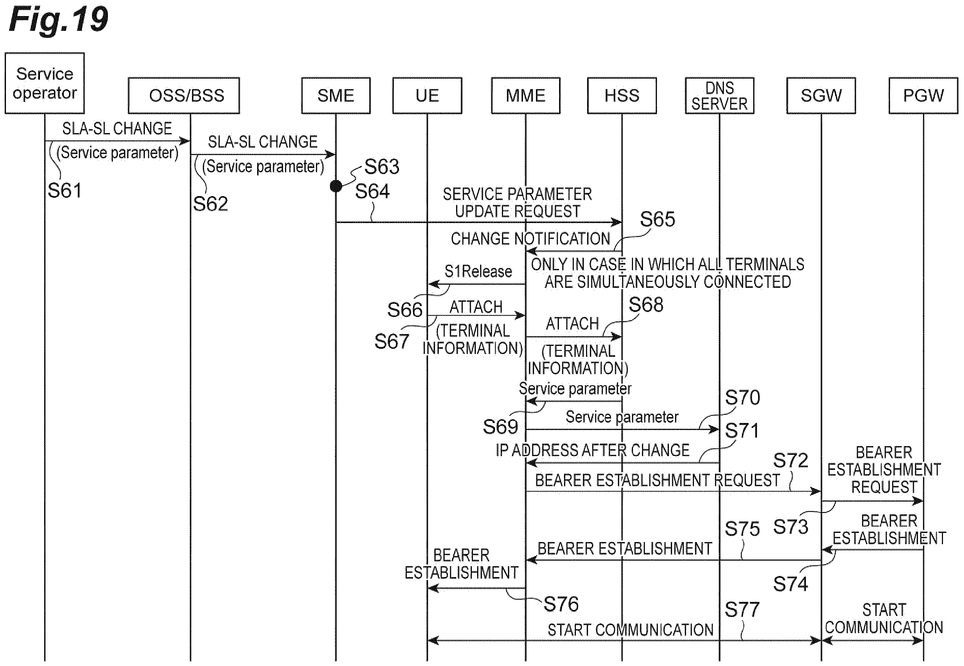

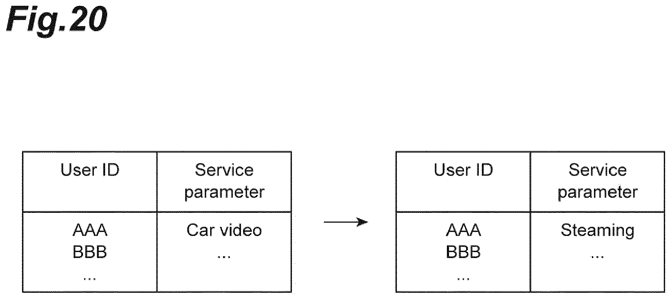

First, the case in which the SLA-SL is changed will be described with reference to Figs. 19 and 20. Fig. 19 is a sequence diagram illustrating a process of requesting a change for the HSS 70 in a case where the SLA-SL of a certain service parameter is changed.

Steps S61 to S63 are respectively similar to Steps S21 to S23, and thus, description thereof will not be presented. When a slice that is an allocation target is changed, the registration requesting unit 17 specifies another service parameter to which a slice after the change is allocated, notifies the HSS 70 of service parameters in which an SLA-SL is changed and the other parameters, and makes an update request for the HSS 70 (Step S64). The HSS 70 changes a user with which the service parameter in which the SLA-SL has been changed is associated to another service parameter. For example, in a case in which the HSS 70 accepts a change request for changing the service parameter that is initially "Car Video" to "Streaming", as illustrated in Fig. 20, the HSS 70 changes a service parameter corresponding to a user whose service parameter is "Car Video" to "Streaming".

The HSS 70 notifies an indication of the change to the MME 90 (Step S65). Steps S66 to S77 are respectively similar to Steps S26 to S37, and thus description thereof will not be presented.

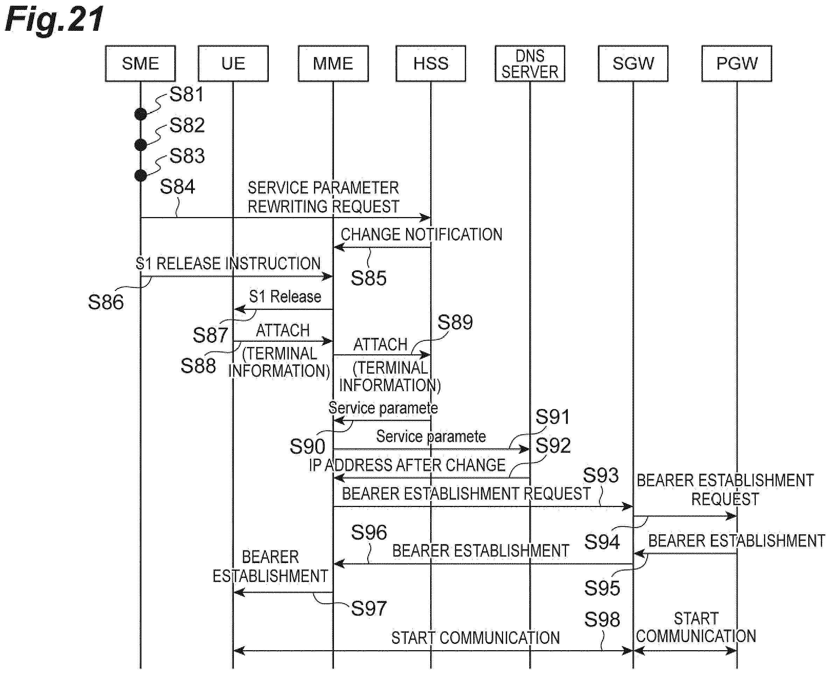

Next, the processing sequence of the case in which the process is changed in accordance with a change in the resources will be described with reference to Fig. 21. Steps S81 to S83 are respectively similar to Steps S41 to S43, and thus description thereof will not be presented. When a slice that is an allocation target is changed, the registration requesting unit 17 specifies another service parameter to which a slice after the change is allocated, notifies the HSS 70 of service parameters in which an SLA-SL is changed and the other service parameters, and makes an update request for the HSS 70 (Step S84). The HSS 70 changes a user with which the service parameter in which the SLA-SL has been changed is associated to another service parameter.

The HSS 70 notifies an indication of the change to the MME 90 (Step S85). Steps S86 to S98 are respectively similar to Steps S46 to S58, and thus description thereof will not be presented.

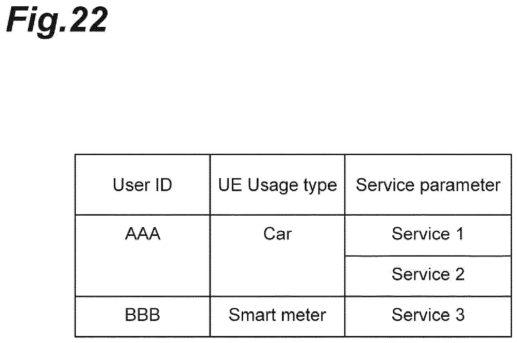

In addition, while a case in which information in which the "User ID" field and the "Service Parameter" field are associated with each other is stored in the HSS 70 has been described, as illustrated in Fig. 22, a "UE Usage type" may be further associated therewith.

Next, the operations and effects of the system 1 according to this embodiment will be described. In the service mapping apparatus 10, an allocation service table associating a service to which a slice has already been allocated, the slice, and an address representing an apparatus executing the service with each other is stored. In addition, the request accepting unit 11 of the service mapping apparatus 10 receives an SLA-SL that is a requirement of the function. The determination unit 15 determines a slice including an SLA-SL corresponding to the service requirement (SLA-SL) of the received service (satisfying the service requirement). In a case in which a service that is an allocation target is associated with a slice in advance, the allocation unit 16 changes the allocation of the service to the determined slice.

In this case, when an allocation request is received, the system 1 reallocates the service to a slice satisfying the service requirement, and thus, even when a service requirement is changed, the service can be reallocated to a slice satisfying the changed service requirement. In this way, a slice to be allocated can be dynamically changed in accordance with a service requirement that is dynamically changed, and an appropriate service can be provided.

In addition, the registration requesting unit 17 of the service mapping apparatus 10 makes an address change request for changing the address to an address corresponding to a slice after change for the DNS server 80 notifying the MME 90 connected to the UE 130 of a connection destination of a service in response to a request for using the service from the UE 130. In this case, since a request for changing a connection destination is made for the DNS server 80 after the allocation of a slice is changed, a user can be appropriately notified of a connection destination after change in accordance with a service use request from the user.

In addition, the request accepting unit 11 acquires a service that is an allocation target and an SLA-SL, and the determination unit 15 determines a slice satisfying the acquired SLA-SL. In this case, since a communication control apparatus transmitting and receiving data of a service is changed in accordance with the service requirement, a very appropriate service can be provided for a user using the service.

In addition, the resource acquiring unit 14 acquires the resource status for each slice at a predetermined timing. The slice requirement acquiring unit 13 specifies the SLA-SL of each slice together with a service requirement of a service to which a slice has already been allocated. The determination unit 15 determines a slice to be allocated on the basis of the service requirement of the service, the SLA-SL of each slice, and the resource status.

In this case, since a slice to be allocated to a service is determined in consideration of the status information of resources, an appropriate slice can be dynamically allocated even in a case in which the resource status changes.

The determination unit 15 determines a slice having a largest number of empty resources among slices satisfying the service requirement. In this case, since the service is allocated to a slice having a largest number of empty resources, the resources can be effectively utilized.

In addition, "information" described in this specification may be represented using any one of various other technologies. For example, data, an instruction, a command, information, a signal, a bit, a symbol, a chip, and the like mentioned over the whole description presented above may be represented using a voltage, a current, an electromagnetic wave, a magnetic field or a magnetic particle, a photo field or a photon, or an arbitrary combination thereof.

A term "determination" used in this specification includes various operations. The "determination", for example, may include calculating, computing, processing, deriving, investigating, looking up (for example, looking up a table, a database, or another data structure), ascertaining, and the like. In addition, the "determination" may include receiving (for example, receiving information), accessing (for example, accessing data in a memory), and the like. Furthermore, the "determination" may include resolving, selecting, choosing, establishing, comparing, and the like.

Description of "on the basis of" used in this specification does not mean "only on the basis of" unless otherwise mentioned. In other words, description of "on the basis of" means both "only on the basis of" and "at least on the basis of'.

The processing order, the sequence, the flowchart, and the like of each aspect/embodiment described in this specification may be changed in order as long as there is no contradiction. For example, in the method described in this specification, elements of various steps are presented in an exemplary order, and the order is not limited to the presented specific order.

Aspects/embodiments described in this specification may be used independently, be combined to be used, or be used to be switched over in accordance with the execution. In addition, a notification (for example, a notification of "being X") of predetermined information is not limited to be performed explicitly and may be performed implicitly (for example, a notification of predetermined information is not performed).

As above, while the present invention has been described in detail, it is apparent to a person skilled in the art that the present invention is not limited to the embodiments described in this specification. The present invention may be modified or changed without departing from the concept and the scope of the present invention set in accordance with the claims. Thus, the description presented in this specification is for the purpose of exemplary description and does not have any limited meaning for the present invention.

### Reference Signs List

1 System
10 Service mapping apparatus
11 Request accepting unit
12 Storage unit
13 Slice requirement acquiring unit
14 Resource acquiring unit
15 Determination unit
16 Allocation unit
17 Registration requesting unit
20 SO
30 OSS/BSS
40 NFVO
41 Storage unit
42 Resource request accepting unit
43 Resource notification unit
50 VNFM
51 Configuration request accepting unit
52 Storage unit
53 Search unit
60 VIM
61 Resource request accepting unit
62 Storage unit
63 Resource notification unit
70 HSS
80 DNS server
90 MME
100 eNB
101 CPU
102 RAM
103 ROM
104 Communication module
105 Auxiliary storage device
110 SGW
120 PGW
130 UE
160 NFVI

## Claims

1. A slice allocating method executed by an allocating apparatus allocating a service using a slice that is a virtual network generated on a network infrastructure to the slice,
the slice allocating method comprising:
an acquiring step of acquiring a service requirement that is a requirement of a function in a target service that is an allocation target service from a company apparatus of a company providing the service;
a determination step of determining a slice satisfying the service requirement acquired from the company apparatus in the acquiring step; and
an allocation step of allocating the target service to the slice determined in the determination step.

2. The slice allocating method according to claim 1, further comprising:
a use status acquiring step of acquiring a resource use status for each slice,
wherein, in the determination step, a slice is determined further on the basis of the resource use status acquired in the use status acquiring step.

3. The slice allocating method according to claim 2, wherein, in the determination step, a slice having a largest number of empty resources among slices satisfying the service requirement is determined.
